# EUROPÄISCHE PATENTANMELDUNG

(11) **EP 4 488 666 A1**
(43) Veröffentlichungstag der Anmeldung: **08.01.2025**
(21) Anmeldenummer: 24177233.4
(22) Anmeldetag: 22.05.2024
(51) Int. Cl.: G01N 21/894, G01N 21/90

(54) **VORRICHTUNG UND VERFAHREN ZUR SEITENWANDINSPEKTION VON PULPEBEHÄLTERN**

(30) Priorität: 04.07.2023 DE 102023117655
(71) Anmelder: KRONES Aktiengesellschaft, 93073 Neutraubling (DE)
(72) Erfinder: Lindner, Peter, 93073 Neutraubling (DE)
(74) Vertreter: Grünecker Patent- und Rechtsanwälte PartG mbB

(57) **Zusammenfassung**

Die vorliegende Erfindung betrifft eine Vorrichtung zur optischen Inspektion eines Pulpebehälters. Die Vorrichtung umfasst eine Beleuchtungseinrichtung, wobei eine Mündung des Pulpebehälters unterhalb der Beleuchtungseinrichtung angeordnet werden kann, so dass Licht der Beleuchtungseinrichtung durch die Mündung des Pulpebehälters in diesen eingestrahlt werden kann; und eine Kamera, die ausgebildet ist, Licht, das durch eine Seitenwand des Pulpebehälters tritt, zu registrieren und so ein Bild der Seitenwand des Pulpebehälters aufzunehmen. Weiterhin stellt die vorliegende Erfindung ein Verfahren zur optischen Inspektion eines Pulpebehälters bereit.

## Beschreibung

Die vorliegende Erfindung betrifft eine Vorrichtung und ein Verfahren zur Seitenwandinspektion von Pulpebehältern.

Bevor Behälter, beispielsweise Getränkeflaschen und -dosen, für eine Abfüllung verwendet werden können, muss sichergestellt werden, dass sie keine Schadstellen wie Risse oder Löcher, oder Verschmutzungen aufweisen. Durchsichtige Behälter können dazu mittels Durchlicht auf Verschmutzungen, Fremdkörper oder Schadstellen von außen überprüft werden. Für undurchsichtige Dosen gibt es Innenwandinspektionen, bei denen Licht von einer großflächigen Lichtquelle durch die große Dosenmündung, die etwa den gleichen Durchmesser wie die Dose aufweist, eingestrahlt wird. Vorrichtungen zur optischen Inspektion von Behältern sind beispielsweise aus DE 11 2016 002 237 T5 und DE 10 2017 123 684 A1 bekannt.

Pulpebehälter hingegen bestehen aus diffusem, weitgehend undurchsichtigem Material, sodass der Innenraum nicht direkt von außen inspiziert werden kann. Dennoch ist es in der industriellen Anwendung notwendig, eine effiziente Inspektion des Pulpebehälter auf Schadstellen und Verschmutzungen zu ermöglichen, bevor diese in einer Abfüllanlage befüllt werden.

Daher ist es ein Ziel der vorliegenden Erfindung, eine Vorrichtung und ein Verfahren bereitzustellen, womit eine zuverlässige und effiziente Inspektion von Pulpebehältern auf Verschmutzungen oder Schadstellen möglich ist. Zu diesem Zweck stellt die Erfindung eine Vorrichtung nach Ansprüchen 1 und 4, sowie ein Verfahren nach den Ansprüchen 9 und 11 bereit.

Erfindungsgemäß umfasst die Vorrichtung zur optischen Inspektion eines Pulpebehälters eine Beleuchtungseinrichtung, wobei eine Mündung des Pulpebehälters unterhalb der Beleuchtungseinrichtung angeordnet werden kann, so dass Licht der Beleuchtungseinrichtung durch die Mündung des Pulpebehälters in diesen eingestrahlt werden kann, und eine Kamera. Die Kamera ist ausgebildet, Licht, das durch eine Seitenwand des Pulpebehälters tritt, zu registrieren und so ein Bild von der Seitenwand des Pulpebehälters aufzunehmen.

Mit dieser Vorrichtung ist es somit möglich, Licht in das Innere eines Pulpebehälters einzustrahlen und die Seitenwand des Pulpebehälters mit einer Kamera zu beobachten. Wenn eine Schadstelle in Form eines Lochs oder eines Risses in der Seitenwand vorliegt, tritt das Licht durch diese Schadstelle hindurch und wird von der Kamera erfasst. In dem von der Kamera aufgenommenen Bild ist die Schadstelle dadurch als erhöhter Fleck zu erkennen und deutlich zu identifizieren. Die Vorrichtung eignet sich auch, wenn in der Seitenwand des Pulpebehälters Stellen mit geringerer Wanddicke vorliegen. Auch hier würde diese Stelle in dem aufgenommenen Bild heller erscheinen als die umliegenden Stellen auf der Seitenwand. Eine Stelle in der Seitenwand mit geringerer Wanddicke fällt ebenfalls unter den Oberbegriff einer Schadstelle. Insgesamt kann mit der beschriebenen Vorrichtung also eine effiziente und zuverlässige Erkennung von Schadstellen in der Seitenwand des Pulpebehälters festgestellt werden.

Der Pulpebehälter kann ganz oder überwiegend aus einer als Pulpe bezeichneten Mischung aus Wasser, Fasern und gegebenenfalls weiteren Additiven bestehen. Die Fasern können natürlichen Ursprungs sein und biologisch abbaubar sein. Die Fasern können Lignin, Bananenblätter und/oder Chinin umfassen. Die Fasern können beispielsweise Zellulosefasern, Fasern von Nadelhölzern, Blattgehölzen und/oder Platanen und/oder von Gräsern, Schilf und/oder Bambus oder dergleichen umfassen. Die Fasern können Seidenfäden, Spinnenfäden, Algen, natürliche Fasern (wie Donau-Silphie-Fasern, Hanf, Mais, Baumwolle), Bananenschalen, Orangenschalen, Gras, Stroh, Kartoffelstärke oder aufbereiteten Kuhdung umfassen. Auch können Zellstofffasern vorgesehen sein, die einem Prozess entstammen, durch den sie künstlich gezüchtet wurden. Diese alternativen Materialien können bei Materialengpässen von Holz als Grundstoff für eine fluide Masse mit Fasern, den Grundstoff vollständig oder teilweise ersetzen. Ebenso können die Fasern Fasermischungen aus holzfremden Material, beispielsweise Baumwolle, Hanf, und/oder Textilfasern umfassen.

Eine Innenwand des Pulpebehälters bezeichnet die gesamte Fläche, die den Innenraum bzw. das Innere der Pulpebehälters begrenzt. Dazu zählen beispielsweise der Behälterboden (im Folgenden auch als Boden bezeichnet), die Seitenwand und/oder gegebenenfalls ein Behälterhals (beispielsweise bei einer Flasche). Alternativ kann die Seitenwand auch als Mantel bezeichnet werden. Auch von außen betrachtet wird die Begrenzung des Pulpebehälters durch den Behälterboden, die Seitenwand und gegebenenfalls den Behälterhals begrenzt.

Die Kamera kann weiterhin ausgebildet sein, ein auf der Seitenwand aufgebrachtes Etikett oder einen auf der Seitenwand des Pulpebehälters aufgebrachten Aufdruck zu erfassen.

Neben der eingangs beschriebenen Inspektion auf Schadstellen erlaubt es die Vorrichtung zusätzlich, eine sogenannte Aufdruckkontrolle durchzuführen. Dabei kann das erfasste Bild des Etiketts oder des Aufdrucks mit einer Vorlage abgeglichen werden, um so eventuelle Abweichungen zwischen dem Bild und der Vorlage festzustellen. Eine Inspektion auf Schadstellen und eine Überprüfung des korrekten Etiketts oder Aufdrucks kann somit in derselben Vorrichtung stattfinden, was die Effizienz der Überprüfung erhöht und keine separate Vorrichtung zur Aufdruckkontrolle benötigt.

Die Beleuchtungseinrichtung kann weiterhin eine Lichtquelle, und ein optisches System mit einem Reflektor und/oder einer Linse umfassen, so dass das optische System derart ausgebildet ist, dass Licht von der Lichtquelle durch die Mündung des Pulpebehälters gestrahlt werden kann.

Mit dem optischen System kann der Strahlengang des Lichts von der Lichtquelle präzise eingestellt werden, sodass ein möglichst großer Anteil des Lichts durch die Mündung in das Innere des Pulpebehälters gestrahlt wird. Dies sorgt für eine gute Ausleuchtung des Inneren des Pulpebehälters und einen gleichzeitig geringeren Lichtleistungsbedarf an die Lichtquelle. Insbesondere kann das optische System derart ausgebildet sein, dass es wie ein Objektiv mit großer Tiefenschärfe wirkt. Dadurch kann ein möglichst großer Bereich der Seitenwand des Pulpebehälters zwischen der Mündung und dem Boden gleichmäßig belichtet werden, was eine effiziente optische Inspektion erlaubt.

Die Vorrichtung kann eine weitere Beleuchtungseinrichtung umfassen, die ausgebildet ist, die Seitenwand des Pulpebehälters von außen diffus zu beleuchten. Insbesondere kann die weitere Beleuchtungseinrichtung konzentrisch um die Beleuchtungseinrichtung und oberhalb der Mündung des Pulpebehälters angeordnet sein.

Die weitere Beleuchtungseinrichtung ermöglicht gute Beleuchtungsbedingungen für die Aufdruckkontrolle (Kontrast, Belichtung) und stellt dadurch eine verlässliche Aufdruckkontrolle sicher. Insbesondere kann mit einer konzentrisch um die Beleuchtungseinrichtung und oberhalb der Mündung angeordneten weiteren Beleuchtungseinrichtung eine besonders gleichförmige Beleuchtung der Außenseite des Pulpebehälters erreicht werden. Dadurch wird die Erkennung des Etiketts oder Aufdrucks zuverlässiger.

Die Erfindung stellt ferner eine Vorrichtung zur optischen Inspektion eines Pulpebehälters bereit, umfassend eine Beleuchtungseinrichtung, und eine Kamera, die oberhalb des Pulpebehälters angeordnet und auf dessen Mündung gerichtet ist. Dabei kann der Pulpebehälter derart bezüglich der Beleuchtungseinrichtung angeordnet werden, dass das Licht der Beleuchtungseinrichtung durch eine Seitenwand und/oder einen Boden des Pulpebehälters hindurch in das Innere des Pulpebehälters dringt, und die Kamera ist derart ausgebildet, das Licht aus dem Inneren des Pulpebehälters zu registrieren und so ein Bild des Inneren des Pulpebehälters aufzunehmen.

Die Pulpe ist teilweise lichtdurchlässig, sodass Licht teilweise durch die Wand hindurchtritt und im Inneren des Pulpebehälters diffus in alle Richtungen abgestrahlt wird. Wenn die Pulpe eine geringe Absorption aufweist, erfährt das Licht im Inneren des Pulpebehälters mehrmaliges Auftreffen auf die Innenwand mit jeweils folgender diffuser Verteilung des Lichts. Dadurch wird das Innere gleichmäßig ausgeleuchtet. Für die Bildaufnahme durch die Mündung des Pulpebehälters werden dadurch gute Belichtungsbedingungen geschaffen, sodass Verschmutzungen, Fremdkörper und/oder Schadstellen sowohl auf dem Boden als auch auf/in der Seitenwand des Pulpebehälters zuverlässig erkannt werden können.

Das von der Beleuchtungseinrichtung bereitgestellte Licht kann Nahinfrarot-Licht, insbesondere im Wellenlängenbereich zwischen 800 nm und 1500 nm, sein oder umfassen.

Absorption von Licht durch die Pulpe des Behälters und Aufdrucke auf der Außenseite der Seitenwand des Pulpebehälters verschlechtern die Ausleuchtung des Inneren des Pulpebehälters und erschweren dadurch die Erkennung von Verschmutzungen und Fremdkörpern. Es hat sich in Versuchen herausgestellt, dass Licht aus besagtem Teil des elektromagnetischen Spektrums besser durch Pulpe transmittiert wird als sichtbares Licht. Darüber hinaus weisen auch viele organische Farben, die für Aufdrucke verwendet werden, im Nahinfrarot-Bereich eine höhere Transmission auf oder sind nahezu lichtdurchlässig. Bei einer geeigneten Wahl der Wellenlänge und der Farbe für den Aufdruck kann dadurch der Einfluss des Aufdrucks auf die optische Inspektion verringert oder sogar vermieden werden.

Dennoch kann der Pulpebehälter ebenso mit sichtbarem Licht, beispielsweise im Bereich zwischen 350 nm und 800 nm, beleuchtet werden. Das verwendete Spektrum kann für die Beleuchtungseinrichtung und die weitere Beleuchtungseinrichtung gleich sein. Weiterhin kann die Beleuchtung durch die Beleuchtungseinrichtung und/oder die weitere Beleuchtungseinrichtung gepulst sein, also gepulstes Licht oder Lichtpulse bereitstellen. Dazu eignen sich zum Beispiel LEDs, insbesondere Chip-on-Board-LEDs (COB-LEDs). Die Dauer eines Lichtpulses kann zwischen 2 µs und 1 ms betragen.

Die Beleuchtungseinrichtung und die weitere Beleuchtungseinrichtung können hinsichtlich des Spektrums, der Leistung, des An- und Abschaltzeitpunktes und/oder der Pulsdauer separat und unabhängig voneinander gesteuert werden.

Die Beleuchtungseinrichtung kann derart ausgebildet sein, dass die Seitenwand des Pulpebehälters diffus ausgeleuchtet wird.

Der Begriff "diffus" bedeutet in diesem Zusammenhand insbesondere, dass die Seitenwand vollständig, vorzugweise mit einer räumlich nahezu konstanten Beleuchtungsstärke, beleuchtet wird. Dies kann beispielsweise mit einer Beleuchtungseinrichtung erreicht werden, die die Seitenwand des Pulpebehälters vollständig umgibt. Durch die diffuse Ausleuchtung der Seitenwand erreicht man auch eine diffuse Ausleuchtung des Inneren des Pulpebehälters, was, wie zuvor beschreiben, zu einer zuverlässigeren Erkennung von Fremdkörpern, Verschmutzungen und/oder Schadstellen führt.

Die Vorrichtung kann weiterhin eine Halterung umfassen, mit der ein darauf angeordneter Pulpebehälter um seine Längsachse rotiert werden kann. Die Halterung kann für beide beschriebenen Formen der Vorrichtung vorgesehen sein, also wenn der Pulpebehälter durch seine Mündung hindurch belichtet wird, und wenn die Seitenwand des Pulpebehälters von außen beleuchtet wird.

Die Beleuchtungseinrichtung und die Kamera sind vorwiegend ortsfest angebracht und der Pulpebehälter wird relativ zu der Beleuchtungseinrichtung und der Kamera bewegt. Durch die Rotation um die Längsachse bei gleichzeitiger Betrachtung durch die Kamera werden im Wesentlichen zwei Vorteile erzielt. Einerseits kann bei einer Ausführung der Beleuchtungseinrichtung, die nicht die vollständige Seitenwand des Pulpebehälters umgibt, eine diffuse Ausleuchtung der Seitenwand und damit auch des Inneren erreicht werden.. Bei einer Beleuchtung des Inneren des Pulpebehälters durch seine Mündung kann mit einer ortsfesten Kamera wegen der Rotation des Pulpebehälters dennoch die komplette Seitenwand auf Schadstellen vorgenommen werden. Andererseits kann eine Aufdruckkontrolle auf der gesamten Seitenwand durchgeführt werden. Etwaige Fehler auf einem Aufdruck oder Etikett werden so zuverlässig erkannt.

Die Vorrichtung kann weiterhin eine Transportvorrichtung umfassen, wobei die Transportvorrichtung transparent oder transluzent ist, sodass der Pulpebehälter durch die Transportvorrichtung hindurch beleuchtet werden kann.

Die beschriebene Lichteinkopplung durch die Seitenwand des Pulpebehälters erfolgt beispielsweise, wenn sich der Pulpebehälter auf einem Transporteur befindet. Lichteinkopplung durch den Boden kann beispielsweise mittels Neckhandling bewerkstelligt werden, wobei der Pulpebehälter hängend transportiert wird. Der Vorteil einer transparenten oder transluzenten Transportvorrichtung besteht darin, dass die Beleuchtungseinrichtung und die Kamera in die bereits bestehende Transportvorrichtung integriert werden können und keine separate Vorrichtung zur optischen Inspektion benötigt wird. Das gesamte System kann damit einfacher und platzsparender konzipiert werden.

Die Vorrichtung kann auch einen linearen Transporteur, wie ein Förderband, für den Transport des Pulpebehälters umfassen, wobei der Transporteur insbesondere eingassig ist. Weiterhin kann die Vorrichtung eine Anordnung aus einer Mehrzahl von Kameras umfassen, um eine Rundumansicht des Pulpebehälters zu erreichen. Beispielsweise umfasst die Anordnung vier Kameras, wovon jeweils zwei Kameras neben dem Transporteur angeordnet sind. Die beiden Kameras auf jeder Seite können dabei bezüglich des Behälters einen Winkel zwischen 60 und 90 Grad, insbesondere zwischen 70 und 90 Grad, einschließen.

Alternativ kann eine Rundumansicht des Pulpebehälters auch mit einem Spiegelkabinett erreicht werden.

Die vorliegende Erfindung stellt ferner ein Verfahren zur optischen Inspektion eines Pulpebehälters bereit. Das Verfahren umfasst das Beleuchten eines Teils einer Innenwand des Pulpebehälters durch seine Mündung mit einer Beleuchtungseinrichtung, und das Aufnehmen eines Bildes mit einer Kamera durch Registrieren von Licht, das durch eine Seitenwand des Pulpebehälters tritt und auf die Kamera trifft.

Die im Zusammenhang mit der Vorrichtung beschriebenen Vorteile gelten in gleicher Weise auf das nachfolgend beschriebene Verfahren.

Es kann Teil des Verfahrens sein, dass ein auf der Seitenwand des Pulpebehälters angebrachtes Etikett mittels der Kamera erfasst wird.

Zudem kann neben der Beleuchtung der Seitenwand des Pulpebehälters durch seine Mündung auch die Seitenwand von außen beleuchtet werden. Das kann insbesondere mit einer weiteren Beleuchtungseinrichtung, die beispielweise konzentrisch um die Beleuchtungseinrichtung und oberhalb der Mündung angeordnet ist, bewerkstelligt werden.

Das Verfahren kann durch Aufnahme eines weiteren Bildes (bzw. zweiten Bildes) erweitert werden. Dabei wird ein erstes Bild aufgenommen, indem Licht registriert wird, das durch die Seitenwand des Pulpebehälters tritt und auf die Kamera trifft. Ein zweites Bild wird aufgenommen, indem das Licht von der weiteren Beleuchtungseinrichtung, das außen an der Seitenwand reflektiert oder gestreut wird, auf die Kamera trifft. Dabei beleuchtet die weitere Beleuchtungseinrichtung die Außenseite der Seitenwand beispielsweise diffus.

Die beiden Bilder können insbesondere während eines Transportvorgangs des Pulpebehälters aufgenommen werden. Dazu wird das zweite Bild etwa 100 µs oder weniger, insbesondere etwa 50 µs oder weniger, nach dem ersten Bild aufgenommen. Dazu müssen auch die Beleuchtungseinrichtung und die weitere Beleuchtungseinrichtung konfiguriert sein, um Lichtpulse zu den beiden Zeitpunkten der Lichtaufnahme mit der angegebenen Dauer bereitzustellen.

In dem beschriebenen Verfahren kann der Pulpebehälter um seine Längsachse rotiert werden, wobei gleichzeitig ein auf der Seitenwand des Pulpebehälters aufgebrachtes Etikett erfasst wird.

Dieses Verfahren ermöglicht eine umfassende Inspektion des Pulpebehälters. Einerseits kann wie beschrieben eine zuverlässige und vollständige Inspektion der Seitenwand des Pulpebehälters auf Schadstellen vorgenommen werden. Andererseits kann auch eine Aufdruckkontrolle auf der kompletten Seitenwand sowie optional eine Konturvermessung des Behälters durchgeführt werden. Das Verfahren kombiniert damit zwei wichtige Schritte der Qualitätskontrolle von Pulpebehältern in effizienter Art und Weise.

Ein weiteres Verfahren zur optischen Inspektion eines Pulpebehälters umfasst das Beleuchten eines Teils einer Seitenwand und/oder eines Bodens des Pulpebehälters mit einer Beleuchtungseinrichtung, sodass ein Teil des Lichts durch die Seitenwand und/oder den Boden in das Innere des Pulpebehälters scheint, und das Aufnehmen eines Bildes vom Inneren des Pulpebehälters mit einer Kamera durch Registrieren von Licht, das durch die Mündung des Pulpebehälters auf die Kamera trifft.

Wie zuvor beschrieben, erlaubt dieses Verfahren eine zuverlässige Erkennung von Fremdkörpern, Verschmutzungen und/oder Schadstellen auf/in dem Boden und/oder auf/in der Seitenwand des Pulpebehälters.

Das Licht der Beleuchtungseinrichtung kann Nahinfrarot-Licht, insbesondere im Wellenlängenbereich zwischen 800 nm und 1500 nm, sein oder umfassen.

Wie bereits im Zusammenhang mit der Vorrichtung beschrieben, wird Licht bzw. elektromagnetische Strahlung aus diesem Wellenlängenbereich besser durch die Pulpe und eventuelle Aufdrucke auf der Seitenwand des Pulpebehälters transmittiert.

Die Seitenwand des Pulpebehälters kann diffus beleuchtet werden.

Es versteht sich, dass die beschriebenen Verfahren in geeigneter Weise mit den hierin beschriebenen Vorrichtungen durchgeführt werden können.

Weitere Merkmale und Vorteile werden nachfolgend anhand der beispielhaften Figuren erläutert. Dabei zeigen:
- Figur 1: eine schematische Darstellung einer Vorrichtung zur optischen Inspektion eines Pulpebehälters gemäß einer ersten Ausführungsform;
- Figur 2: eine schematische Darstellung einer Vorrichtung zur optischen Inspektion eines Pulpebehälters gemäß einer zweiten Ausführungsform;
- Figur 3: eine schematische Darstellung einer Vorrichtung zur optischen Inspektion eines Pulpebehälters gemäß einer dritten Ausführungsform; und
- Figur 4: eine schematische Darstellung einer Vorrichtung zur optischen Inspektion eines Pulpebehälters gemäß einer vierten Ausführungsform.

Im Folgenden und in den Figuren werden in den verschiedenen Ausführungsbeispielen, sofern nicht anders spezifiziert, die gleichen Bezugszeichen für gleiche oder entsprechende Elemente verwendet.

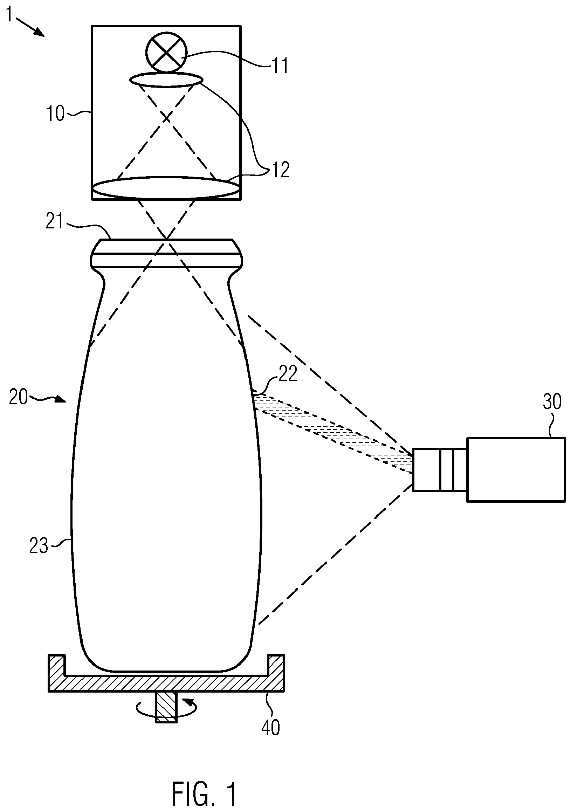

Figur 1 zeigt eine Vorrichtung 1 zur optischen Inspektion eines Pulpebehälters 20 gemäß einer ersten Ausführungsform der vorliegenden Erfindung als schematische Seitenansicht. Die Vorrichtung 1 umfasst eine Beleuchtungseinrichtung 10, die oberhalb eines Pulpebehälters 20 angeordnet ist. Der Pulpebehälter 20 selbst weist einen Boden, eine Seitenwand 23 und eine Mündung 21 auf. In der Seitenwand 23 ist eine Schadstelle 22 in Form eines Lochs oder eines Risses ausgebildet. Der Pulpebehälter 20 ist weiterhin auf einer Halterung 40 angeordnet. Die Halterung 40 ist ausgebildet, den Pulpebehälter 20 um seine Längsachse zu rotieren. Die Rotation kann dabei insbesondere kontinuierlich und/oder um einen Winkel größer oder gleich 360 Grad erfolgen.

Die gezeigte Beleuchtungseinrichtung 10 umfasst neben einer Lichtquelle 11 auch ein optisches System 12, in diesem Fall aus zwei konvexen Linsen. Es versteht sich allerdings, dass das optische System 12 weder auf die gezeigte Anzahl an Linsen, noch deren Form beschränkt ist und beispielsweise ein System aus einer konkaven Linse und einer konvexen Linse sein kann. Das optische System 12 dient dem Zweck, das Innere des Pulpebehälters besser auszuleuchten als es die Lichtquelle 11 alleine bewerkstelligen könnte. Dazu wird das Licht von der Lichtquelle 11 derart gelenkt, dass es durch die Mündung 21 in des Innere des Pulpebehälters 20 eingestrahlt wird. Das optische System 12 erzielt eine höhere Einstrahlung von Licht durch die Mündung, sodass die Lichtausbeute höher ist bzw. eine geringere Lichtleistung für die Lichtquelle 11 benötigt wird.

Die Vorrichtung 1 umfasst darüber hinaus eine Kamera 30, die auf die Seitenwand 23 des Pulpebehälters 20 gerichtet ist. Die Kamera 30 ist ausgebildet, Licht, das durch die Seitenwand 23 hindurchtritt, zu registrieren und entsprechend ein Bild aufzunehmen. Da der Pulpebehälter 20 auf einer rotierenden Halterung 40 angeordnet ist, kann die Kamera 30 die komplette Seitenwand 23 inspizieren.

Im gezeigten Beispiel weist die Seitenwand eine Schadstelle 22 auf, durch die Licht durch die Seitenwand 23 tritt und von der Kamera 30 erfasst wird. In dem von der Kamera 30 aufgenommenen Bild erscheint diese Schadstelle als erhöhte Stelle gegenüber der Umgebung. Dadurch wird die Schadstelle 22 zuverlässig erkannt und der Pulpebehälter 20 entsprechend als fehlerhaft identifiziert.

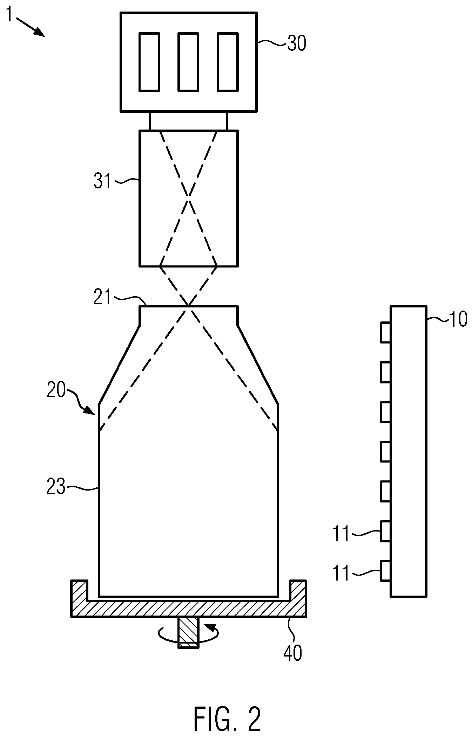

Figur 2 zeigt eine Vorrichtung 1 zur optischen Inspektion eines Pulpebehälters 20 gemäß einer zweiten Ausführungsform der vorliegenden Erfindung als schematische Seitenansicht. Die Vorrichtung 1 umfasst zunächst eine Beleuchtungseinrichtung 10, die ausgebildet ist, Licht zu emittieren. Die Beleuchtungseinrichtung 10 ist derart angeordnet, dass neben ihr ein Pulpebehälter 20 positioniert werden kann, sodass eine Seitenwand 23 des Pulpebehälters 20 mit dem Licht bestrahlt wird. Da Pulpe teilweise lichtdurchlässig ist, wird ein Teil des Lichts in das Innere des Pulpebehälters 20 transmittiert, sodass das Innere des Pulpebehälters 20 ausgeleuchtet wird. Im gezeigten Beispiel ist die Beleuchtungseinrichtung 10 in ihrer Höhe an den Pulpebehälter 20 angepasst, um sicherzustellen, dass die komplette Seitenwand 23 des Pulpebehälters 20 beleuchtet wird.

Die Beleuchtungseinrichtung 10 kann eine Mehrzahl von Lichtquellen 11 umfassen, beispielsweise LEDs, die an der Beleuchtungseinrichtung 10 angeordnet sind. Dabei ist die gezeigte Zahl an Lichtquellen 10b und deren Anordnung keinesfalls einschränkend aufzufassen. Beispielsweise kann es sich bei den Lichtquellen 10b auch um sogenannte Chip-on-Board-LEDs handeln, die dicht an dicht angeordnet sind, um eine hohe Leuchtdichte zu erreichen. Eine hohe Leuchtdichte ist von Vorteil, um eine gute Ausleuchtung des Inneren des Pulpebehälters 20 zu erreichen und die Zuverlässigkeit der Erkennung von Schadstellen oder Verschmutzungen zu verbessern.

Weiterhin kann die Beleuchtungseinrichtung Licht im Nahinfrarot-Bereich emittieren, beispielsweise mit einer Wellenlänge zwischen 800 nm und 1500 nm. Wie bereits zuvor erläutert, ist Nahinfrarot-Licht von Vorteil, da es besser durch die Pulpe und organische Farben transmittiert wird. Ein Aufdruck auf dem Pulpebehälter beeinflusst in diesem Fall nicht die optische Inspektion.

Die Vorrichtung umfasst weiterhin eine Kamera 30, die Licht aus dem Inneren des Pulpebehälters 20, das durch die Mündung 21 des Pulpebehälters 20 tritt, registriert und so ein Bild vom Inneren des Pulpebehälters 20 erzeugt. Auf diese Weise werden Schadstellen, Fremdkörper und/oder Verschmutzungen auf dem Boden oder auf der Seitenwand 23 des Pulpebehälters 20 erkannt und dieser entsprechend als fehlerhaft identifiziert.

Der Pulpebehälter 20 ist auf einer Halterung 40 angeordnet, die ausgebildet ist, den Pulpebehälter 20 um seine (hier vertikale) Längsachse zu rotieren (durch den Pfeil dargestellt). Dies hat den Vorteil, dass die Seitenwand 23 diffus ausgeleuchtet werden kann, ohne die Notwendigkeit, dass die Beleuchtungseinrichtung 10 die Seitenwand 23 des Pulpebehälters vollständig umgibt. Eine diffuse Ausleuchtung des Seitenwand 23 führt automatisch auch zu einer diffusen Ausleuchtung des Inneren des Pulpebehälters, was gute Bedingungen für die Belichtung des von der Kamera aufgenommenen Bildes bereitstellt. Dadurch wird eine hohe Zuverlässigkeit in der Erkennung von Fremdkörpern, Verschmutzungen und/oder Schadstellen durch eine hohe Bildqualität erreicht.

Alternativ kann die im zweiten Ausführungsbeispiel beschriebene Vorrichtung 1 auch eine Beleuchtung des Pulpebehälters 22 durch dessen Boden bereitstellen. Dazu kann die Halterung 40, auf der der Pulpebehälter 20 angeordnet ist, als Transportvorrichtung dienen und transparent sein, indem die Halterung 40 zum Beispiel aus Plexiglas, Glas oder einem anderen transparenten Material besteht. Entsprechend muss die Lichtquelle 10 unterhalb der Halterung 40 angeordnet und auf den Boden des Pulpebehälters 20 gerichtet sein. Anstelle der Halterung 40 kann die Vorrichtung auch eine Einrichtung zum Neckhandling als Transportvorrichtung umfassen, sodass der Boden des Pulpebehälters 20 direkt beleuchtet werden kann.

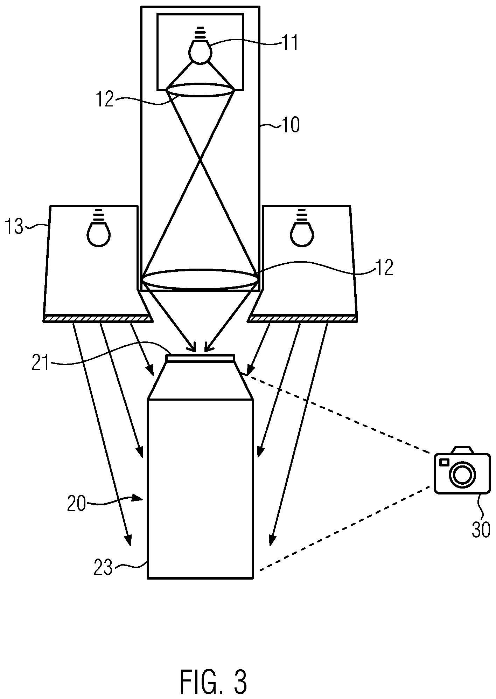

In Figur 3 ist eine dritte Ausführungsform der beschriebenen Vorrichtung 1 dargestellt. Diese unterscheidet sich von der ersten Ausführungsform dahingehend, dass sie eine zweite Beleuchtungseinrichtung 13 umfasst. Die zweite Beleuchtungseinrichtung 13 ist konzentrisch um die Beleuchtungseinrichtung 10 angeordnet. Die zweite Beleuchtungseinrichtung 13 ist ausgebildet, die Seitenwand 23 des Pulpebehälters 20 diffus zu beleuchten. Durch dieses Auflicht kann ein auf der Seitenwand 23 aufgebrachtes Etikett oder ein Aufdruck mittels der Kamera 30 überprüft werden.

Es versteht sich, dass diese Ausführungsform beispielsweise mit einer Halterung kombiniert werden kann, um den Behälter um seine Längsachse zu rotieren. Auf diese Weise kann die Seitenwand rundum (360°-Ansicht) sowohl auf Schadstellen, als auch auf die Korrektheit eines Etiketts oder Aufdrucks inspiziert werden.

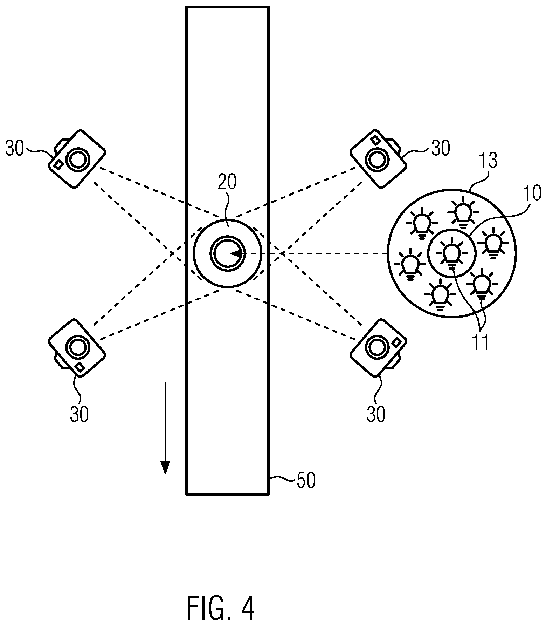

Figur 4 zeigt eine Vorrichtung 1 zur optischen Inspektion eines Pulpebehälters 20 gemäß einer weiteren Ausführungsform als Draufsicht, die sich von der zuvor beschriebenen dritten Ausführungsform in den nachfolgenden Aspekten unterscheidet. Die Beleuchtungseinrichtung 10 und die weitere Beleuchtungseinrichtung 13 sind schematisch neben dem Pulpebehälter 20 dargestellt, allerdings ist die Konfiguration derart zu verstehen, dass sich die Beleuchtungseinrichtungen 10, 13 wie in Figur 3 dargestellt oberhalb des Pulpebehälters 20 befinden.

Zunächst umfasst die Vorrichtung 1 einen linearen Transporteur 50, beispielsweise ein Förderband, der insbesondere eingassig ausgebildet ist. Gegenüber einer Halterung hat der Transporteur 50 den weiteren Vorteil, dass eine große Zahl von Behältern in Reihe transportiert werden kann, während andernfalls eine Vielzahl einzelner Halterungen mit zugehörigem Transportmechanismus bereitgestellt werden müsste. Weiterhin umfasst die Vorrichtung 1 eine Anordnung aus einer Mehrzahl von Kameras 30, in diesem Beispiel vier Kameras 30, wobei jeweils zwei Kameras 30 auf den beiden Seiten des Transporteurs 50 angeordnet sind. Die Anordnung ist insbesondere symmetrisch bezüglich des Transporteurs. Es versteht sich allerdings, dass die Anzahl der Kameras nicht auf dieses Beispiel beschränkt ist.

Die beiden Kameras 30 auf einer gegebenen Seite des Transporteurs 50 schließen bezüglich des Pulpebehälters 20 einen Winkel ein, der im gezeigtem Beispiel etwa 60 Grad beträgt. Allerdings kann der Winkel im Bereich zwischen 60 und 90 Grad liegen. Durch diese Anordnung der Kameras 30 kann eine Rundumansicht der Seitenwand 23 des Pulpebehälters erreicht werden, beispielsweise ohne dass der Behälter 20 auf einer rotierbaren Halterung postiert ist. Der resultierende Aufbau wird dadurch vereinfacht und eine große Anzahl an Behältern kann in einer bestimmten Zeit überprüft werden.

Insbesondere im Zusammenspiel mit den beiden beschriebenen Beleuchtungseinrichtungen kann eine Inspektion auf Schadstellen und eine Aufdruckkontrolle der kompletten Seitenwand 23 (360 Grad-Ansicht) durchgeführt werden. Dazu sind die beiden Beleuchtungseinrichtungen 10, 13 gepulste Lichtquellen, die nur in einem bestimmten Zeitraum Licht bereitstellen. Für das erste Bild wird die Beleuchtungseinrichtung 10 angeschaltet und die Kameras 30 überprüfen, ob Licht durch die Seitenwand 23 des Pulpebehälters 20 hindurchtritt. Auf diese Weise werden Schadstellen identifiziert. Für das zweite Bild wird die Beleuchtungseinrichtung 13 angeschaltet, um die Seitenwand 23 von außen diffus zu beleuchten. Dies dient der Aufdruckkontrolle. Dieses Verfahren kann sowohl mit einer Kamera 30 als auch mit einer Anordnung aus einer Mehrzahl von Kameras 30 erfolgen.

Bei einer üblichen Transportgeschwindigkeit auf dem Transporteur von rund 2 m/s entspricht dies einem räumlichen Versatz des Behälters von lediglich 0,1 mm zwischen den beiden Aufnahmen. Dieser Versatz ist klein genug, sodass die beiden Bilder miteinander verglichen werden können. Es bedarf also nur einer Kamera, um bewegte Behälter gleichzeitig auf Schadstellen zu überprüfen und eine Aufdruckkontrolle durchzuführen.

## Patentansprüche

1. Vorrichtung (1) zur optischen Inspektion eines Pulpebehälters (20), umfassend:
eine Beleuchtungseinrichtung (10), wobei eine Mündung (21) des Pulpebehälters (20) unterhalb der Beleuchtungseinrichtung (10) angeordnet werden kann, so dass Licht der Beleuchtungseinrichtung (10) durch die Mündung (21) des Pulpebehälters (20) in diesen eingestrahlt werden kann; und
eine Kamera (30), die ausgebildet ist, Licht, das durch eine Seitenwand (23) des Pulpebehälters (20) tritt, zu registrieren und so ein Bild der Seitenwand (23) des Pulpebehälters (20) aufzunehmen.

2. Vorrichtung (1) nach Anspruch 1, wobei die Kamera (30) weiterhin ausgebildet ist, ein auf der Seitenwand (23) des Pulpebehälters (20) aufgebrachtes Etikett oder einen auf der Seitenwand (23) des Pulpebehälters (20) aufgebrachten Aufdruck zu erfassen.

3. Vorrichtung (1) nach einem der vorangegangenen Ansprüche, wobei die Beleuchtungseinrichtung (10) umfasst:
eine Lichtquelle (11); und
ein optisches System (12) mit einem Reflektor und/oder einer Linse,
so dass das optische System (12) derart ausgebildet ist, dass Licht von der Lichtquelle (11) durch die Mündung (31) des Pulpebehälters (20) gestrahlt wird.

4. Vorrichtung (1) nach einem der vorangegangenen Ansprüche, ferner umfassend eine weitere Beleuchtungseinrichtung (13) zur diffusen Beleuchtung der Seitenwand (23) des Pulpebehälters (20) von außen,
wobei die weitere Beleuchtungseinrichtung (13) insbesondere konzentrisch um die Beleuchtungseinrichtung (10) und oberhalb der Mündung (21) des Pulpebehälters (20) angeordnet ist.

5. Vorrichtung (1) zur optischen Inspektion eines Pulpebehälters (20), umfassend:
eine Beleuchtungseinrichtung (10); und
eine Kamera (30), die oberhalb des Pulpebehälters (20) angeordnet und auf dessen Mündung (23) gerichtet ist,
wobei der Pulpebehälter (20) derart bezüglich das Beleuchtungseinrichtung (10) angeordnet werden kann, dass das Licht der Beleuchtungseinrichtung (10) durch eine Seitenwand (23) und/oder einen Boden des Pulpebehälters (20) hindurch in das Innere des Pulpebehälters (20) dringt, und
wobei die Kamera (30) ausgebildet ist, das Licht aus dem Inneren des Pulpebehälters (20) zu registrieren und so ein Bild des Inneren des Pulpebehälters (20) aufzunehmen.

6. Vorrichtung (1) nach Anspruch 5, wobei die Beleuchtungseinrichtung (10) derart ausgebildet ist, dass die Seitenwand (23) des Pulpebehälters (20) diffus ausgeleuchtet wird.

7. Vorrichtung (1) nach einem der vorangegangenen Ansprüche, weiterhin umfassend eine Halterung (40), mit der ein darauf angeordneter Pulpebehälter (20) um dessen Längsachse rotiert werden kann.

8. Vorrichtung (1) nach einem der Ansprüche 1 bis 6, weiterhin umfassend einen linearen Transporteur zum Transport des Pulpebehälters (20) und eine oder mehrere weitere Kameras (30),
wobei die Kameras (30) auf beiden Seiten des Transporteurs (50) angeordnet und derart ausgerichtet sind, dass Licht von dem Pulpebehälter (20) auf die Kameras (30) fällt.

9. Verfahren zur optischen Inspektion eines Pulpebehälters (20), umfassend:
Beleuchten eines Teils einer Innenwand des Pulpebehälters (20) durch seine Mündung (23) mit einer Beleuchtungseinrichtung (10), und
Aufnehmen eines Bildes mit einer Kamera (30) durch Registrieren von Licht, das durch eine Seitenwand (23) des Pulpebehälters (20) tritt und auf die Kamera (30) trifft.

10. Verfahren nach Anspruch 9, wobei ein auf der Seitenwand (23) des Pulpebehälters angebrachtes Etikett mittels der Kamera (30) erfasst wird.

11. Verfahren nach einem der Ansprüche 10 oder 11, wobei der Pulpebehälter (20) um seine Längsachse rotiert wird, und
wobei gleichzeitig ein auf der Seitenwand (23) des Pulpebehälters aufgebrachtes Etikett oder ein auf der Seitenwand (23) des Pulpebehälters (20) aufgebrachter Aufdruck erfasst wird.

12. Verfahren nach einem der Ansprüche 9 bis 11, weiterhin umfassend:
Beleuchten der Seitenwand (23) des Pulpebehälters (20) von außen mit einer weiteren Beleuchtungseinrichtung (13), und
Aufnehmen eines weiteren Bildes mit der Kamera indem das Licht von der weiteren Beleuchtungseinrichtung, das außen an der Seitenwand reflektiert oder gestreut wird, auf die Kamera trifft und registriert wird.

13. Verfahren nach Anspruch 12, wobei die Beleuchtungseinrichtung (10) und die weitere Beleuchtungseinrichtung (13) jeweils Lichtpulse bereitstellen, und
wobei das Bild und das weitere Bild in einem zeitlichen Abstand von 100 µs oder weniger, insbesondere 50 µs oder weniger aufgenommen werden.

14. Verfahren zur optischen Inspektion eines Pulpebehälters (20), umfassend:
Beleuchten eines Teils einer Seitenwand (23) und/oder eines Bodens des Pulpebehälters (20) mit einer Beleuchtungseinrichtung (10), sodass ein Teil des Lichts durch die Seitenwand (23) und/oder den Boden in das Innere des Pulpebehälters (20) scheint, und
Aufnehmen eines Bildes vom Inneren des Pulpebehälters (20) mit einer Kamera (30) durch Registrieren von Licht, das durch die Mündung (23) des Pulpebehälters (20) auf die Kamera (30) trifft.

15. Verfahren nach einem der Ansprüche 9 bis 14, wobei das Licht der Beleuchtungseinrichtung (10) Nahinfrarot-Licht, insbesondere im Wellenlängenbereich zwischen 800 nm und 1500 nm, ist oder umfasst.
